# EUROPEAN PATENT APPLICATION

(11) **EP 4 607 726 A1**
(43) Date of publication of application: **27.08.2025**
(21) Application number: 23879768.2
(22) Date of filing: 17.10.2023
(51) Int. Cl.: H02G 3/16, H01R 4/34, H02G 1/14, H02G 3/14, H02G 15/08, H05K 7/06

(54) **BOLT HOLDING STRUCTURE AND ELECTRICAL CONNECTION BOX**

(30) Priority: 21.10.2022 JP 2022168768
(71) Applicant: FURUKAWA ELECTRIC CO., LTD., Tokyo 100-8322 (JP); Furukawa Automotive Systems Inc., Inukami-gun, Shiga 522-0242 (JP)
(72) Inventor: HIROSE, Satoshi, Inukami-gun, Shiga 522-0242 (JP); TAMURA, Yuji, Inukami-gun, Shiga 522-0242 (JP); WATANABE, Akihisa, Tokyo 100-8322 (JP)
(74) Representative: HKW Intellectual Property PartG mbB
(86) International application number: PCT/JP2023/037467
(87) International publication number: WO 2024/085125

(57) **Abstract**

The bolt holding structure (100) includes a bolt (13) and a holder (12). The bolt (13) holds the conductors (bus bar (14), terminal (15)) between itself and the nut (17). The holder (12) holds the bolt (13). The bolt (13) includes a fixing portion, a shaft portion (33), and a receiving portion (32). The fixing portion can be fixed to the holder (12). The shaft portion (33) is formed with a screw groove, and the nut 17 is fastened thereto. The receiving portion (32) is located between the fixing portion and the shaft portion (33) in an axial direction, and has a portion located radially outward from the fixing portion when viewed in the axial direction.

## Description

### TECHNICAL FIELD

The present invention relates to a bolt holding structure including a bolt and a holder.

### BACKGROUND ART

Patent Document 1 discloses a bolt support structure including a bolt and an attachment portion. The bolt has a head and a shaft. After a bus bar and a terminal fitting are passed through the shaft of the bolt, a nut is fastened to the shaft of the bolt. This causes the bus bar and the terminal fitting to be clamped between the head of the bolt and the nut and fixed. As a result, the bus bar and the terminal fitting are electrically connected to each other.

### PRIOR DOCUMENTS

### PATENT DOCUMENTS

Patent Document 1: Japanese patent No. JP 5864151

### SUMMARY OF THE INVENTION

### PROBLEM TO BE SOLVED BY THE INVENTION

In Patent Document 1, the conductor (bus bar, terminal fitting) is sandwiched between the bolt and the nut, so the contact area between the bolt and the conductor is particularly likely to be small. As a result, a local force is applied to the conductor, which may cause the conductor to deform or weaken the force holding the conductor.

The present invention has been made in consideration of the above circumstances, and its main objective is to provide a configuration in a bolt holding structure including a bolt and a holder, which is capable of suppressing deformation of a conductor sandwiched between the bolt and a nut, and suppressing a weakening of the force holding the conductor.

### MEANS FOR SOLVING THE PROBLEMS AND EFFECTS

The problem to be solved by the present invention has been described above. Next, the means for solving this problem and the effects thereof will be described.

According to an aspect of the present invention, there is provided a bolt holding structure having the following configuration. That is, the bolt holding structure includes a bolt and a holder. The bolt holds a conductor between itself and a nut. The holder holds the bolt. The bolt includes a fixing portion, a shaft portion, and a receiving portion. The fixing portion is fixable to the holder. The shaft portion is formed with a screw groove, and the nut is fastened thereto. The receiving portion is located between the fixing portion and the shaft portion in an axial direction, and has a portion located radially outward from the fixing portion when viewed in the axial direction.

Because the bolt has the receiving portion, local force is less likely to be applied to the conductor sandwiched between the bolt and nut. As a result, it is capable of suppressing deformation of a conductor sandwiched between the bolt and a nut, and suppressing a weakening of the force holding the conductor.

In the above bolt holding structure, it is preferable that the holder is made of resin.

This makes it possible to stably fix the bolt to the holder by utilizing the elastic deformation of the resin while ensuring insulation between the bolt and the holder.

In the above bolt holding structure, it is preferable that the holder has a structure capable of fixing the fixing portion of the bolt by press-fitting.

This allows the bolt to be fixed to the holder simply by inserting the fixing portion of the bolt into the holder. In addition, rattle is less likely to occur between the bolt and the holder.

In the above bolt holding structure, it is preferable that the receiving portion is circular when viewed in the axial direction.

This makes it easier to manufacture the bolt having the receiving portion. Moreover, the contact area between the receiving portion and the conductor can be ensured regardless of the orientation of the receiving portion.

In the above-mentioned bolt holding structure, it is preferable to have the following configuration. That is, the holder is formed with an opening portion into which the fixing portion of the bolt can be attached, and an edge portion that forms the periphery of the opening portion. When viewed in the axial direction, a contour of the receiving portion of the bolt overlaps with the edge portion of the holder.

Since the contour of the receiving portion overlaps with the edge portion of the holder, the size of the receiving portion can be increased without the receiving portion protruding from the holder. This allows the contact area between the receiving portion and the conductor to be increased, making it even more difficult for local force to be applied to the conductor.

In the above-mentioned bolt holding structure, it is preferable to have the following configuration. That is, the holder is formed with the opening portion into which the fixing portion of the bolt can be attached. When the opening portion is viewed in the axial direction, one of two adjacent sides has a length longer than the other side.

This allows the present invention to be implemented using opening portions of various shapes, not just square.

In the above-mentioned bolt holding structure, it is preferable to have the following configuration. That is, the holder is formed with the opening portion into which the fixing portion of the bolt can be attached, and the edge portion that forms the periphery of the opening portion. When viewed in the axial direction, the opening portion and the fixing portion are rectangular. A plurality of inner ribs are formed on an inner wall surface of the opening portion. At least two of the internal ribs are positioned opposite each other. When viewed in the axial direction, the length of one side of the fixing portion is longer than the length of a line connecting the opposing inner ribs and shorter than the length of one side of the opening portion.

This makes it easy to insert the fixing portion into the opening portion, and also makes it possible to fix the fixing portion to the holder using the inner rib.

In the above-mentioned bolt holding structure, it is preferable to have the following configuration. That is, the receiving portion is circular when viewed in the axial direction. That is, the holder is formed with the opening portion into which the fixing portion of the bolt can be attached, and the edge portion that forms the periphery of the opening portion. When viewed in the axial direction, the opening portion is square or rectangular having a long side and a short side. When viewed in the axial direction, the diameter of the receiving portion is longer than the length of one side of the square or the length of the longer side of the rectangle.

Since the diameter of the receiving portion is greater than the length of one side of the square or the length of the long side of the rectangle of the opening portion, the receiving portion and the holder can come into contact with each other.

In the above-mentioned bolt holding structure, it is preferable to have the following configuration. That is, the receiving portion is circular when viewed in the axial direction. That is, the holder is formed with the opening portion into which the fixing portion of the bolt can be attached, and the edge portion that forms the periphery of the opening portion. When viewed in the axial direction, the opening portion is square. When viewed in the axial direction, the diameter of the receiving portion is longer than the length of one side of the opening portion.

Since the diameter of the receiving portion is longer than the length of one side of the opening portion, the receiving portion and the holder can come into contact with each other.

In the above-mentioned bolt holding structure, it is preferable to have the following configuration. That is, the holder is attached to a base block. The holder is formed with a protrusion portion that protrudes radially outward. When the holder is attached to the base block in the correct orientation, the protrusion portion and the base block do not interfere. When the holder is attached to the base block in an incorrect orientation, the protrusion portion and the base block interfere.

This prevents the holder from being attached to the base block in an incorrect orientation.

In the above-mentioned bolt holding structure, it is preferable that the holder is formed with a drainage hole for draining water that has entered.

This can prevent water from accumulating inside the holder.

In the above-mentioned bolt holding structure, it is preferable that a surface of the receiving portion of the bolt facing the fixing portion be in surface contact with an outer surface of the holder.

This makes it possible to stabilize the orientation of the receiving portion, so that the receiving portion and the conductor can be directly opposed to each other. As a result, a sufficient contact area between the receiving portion and the conductor can be secured, making it even more difficult for local force to be applied to the conductor.

The above-mentioned electrical junction box preferably has the following configuration. That is, the electrical junction box includes the bolt holding structure, a first conductor, and a second conductor. The first conductor and the second conductor are sandwiched and fixed between the bolt and the nut by fastening the nut to the bolt.

### BRIEF DESCRIPTION OF THE DRAWINGS

FIG. 1 A figure that is a partially sectional perspective view of an electrical junction box according to an embodiment of the present invention.
FIG. 2 A figure that is a perspective view showing that a bus bar and a terminal are fixed by a bolt and a nut.
FIG. 3 A figure that is a perspective view of a bolt holding structure.
FIG. 4 A figure that is a plan view of the bolt holding structure as viewed in an axial direction.
FIG. 5 A figure that is a perspective view of the bolt and the holder.
FIG. 6Afigure that is a perspective view showing drainage holes formed in the bottom surface of the holder.
FIG. 7 A figure that is a diagram (plan view) showing a positional relationship between a fixing portion and an opening portion when viewed in the axial direction.
FIG. 8A figure that is a perspective view showing a portion of a base block to which a holder is fixed.
FIG. 9 Afigure that is a perspective view showing a state in which the holder is fixed to the base block.

### DETAILED DESCRIPTION OF THE INVENTION

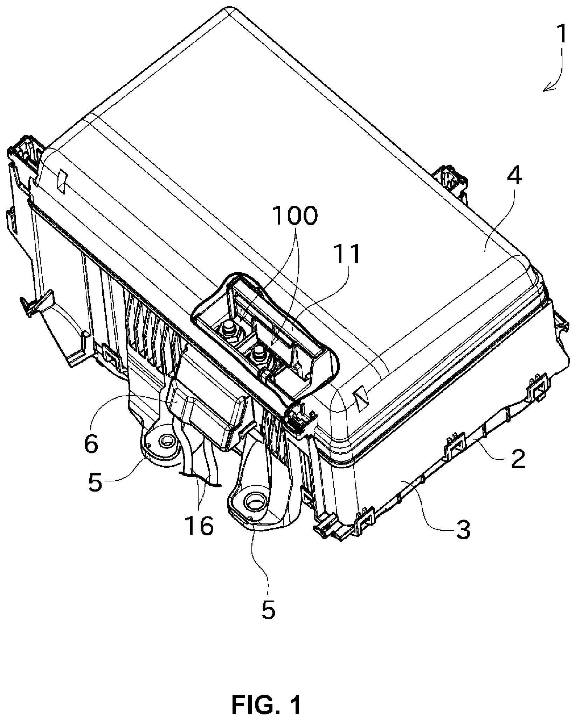

Next, an embodiment of the present invention will be described with reference to the drawings. First, an electrical junction/connection box 1 will be described with reference to FIG. 1.

The electrical junction box 1 is provided in an automobile. The electrical junction box 1 is provided with a plurality of relays and fuses. The electrical junction box 1 distributes power supplied from a battery or a generator and supplies it to each of the on-board devices. However, the location where the electrical junction box 1 is provided is not limited to an automobile.

As shown in FIG. 1, the electrical junction box 1 is a box-shaped member, and an exterior of the electrical junction box 1 includes a lower cover 2, a base 3, and an upper cover 4. The lower cover 2 constitutes a bottom portion of the electrical junction box 1. The base 3 constitutes a side portion of the electrical junction box 1. The upper cover 4 constitutes a lid portion of the electrical junction box 1. The thick line shown in FIG. 1 is cutaway lines, and show an inside of the upper cover 4 by cutting away a part of the upper cover 4. A base block 11 is provided in a space surrounded by the lower cover 2, the base 3, and the upper cover 4. In addition to the relays and fuses described above, bus bar, terminal, electric wire, etc. are fixed to the base block 11.

The electrical junction box 1 further includes a mounting portion 5 and an electric wire lead-out portion 6. The mounting portion 5 has a structure (mounting hole) for fixing to an installation location. The electric wire lead-out portion 6 is a portion for leading out the electric wire 16 arranged inside the electrical junction box 1. The electric wire 16 is connected to the battery, the generator, or the on-board device. The electric wire 16 is fixed to the bolt holding structure 100, and the bolt holding structure 100 is fixed to the base block 11. The details of the fixing structures will be described later. In the electrical junction box 1 of this embodiment, a plurality of electric wires 16 are individually connected to a plurality of bolt holding structures 100.

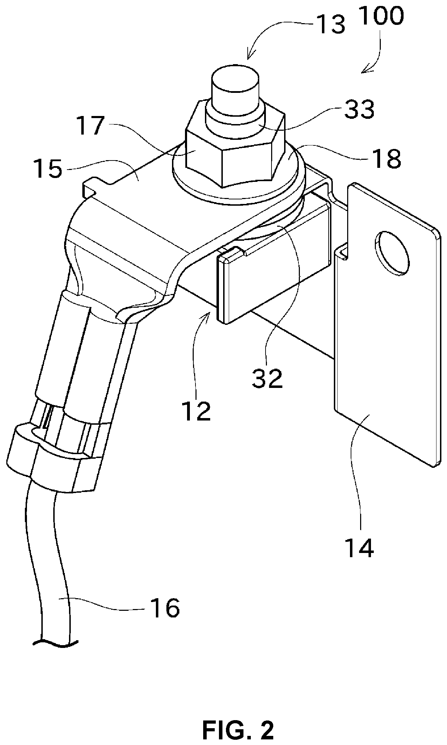

Next, with reference to FIG. 2, the conductor attached to the bolt holding structure 100 will be described.

The bolt holding structure 100 includes a holder 12 and a bolt 13. The holder 12 holds the bolt 13. A nut 17 can be fastened to the bolt 13. With multiple conductors disposed between the bolt 13 and the nut 17, the conductors can be electrically and mechanically connected to each other by fastening the nut 17 to the bolt 13. In this embodiment, a bus bar 14 is used as the first conductor, and a terminal 15 is used as the second conductor. The combination of the first conductor and the second conductor is merely an example and is not limited to the configuration of this embodiment.

The bus bar 14 is made of metal and is a plate-like member having electrical conductivity. The bus bar 14 is electrically connected to another terminal 15, a relay, a fuse, or the like. The bus bar 14 has a through hole formed therein for inserting the bolt 13 therein. The terminal 15 is, for example, O-shaped or U-shaped, and is set on the bolt 13. An electric wire 16 is connected to the terminal 15.

In this embodiment, the bus bar 14 is disposed on the bolt 13 side, and the terminal 15 is disposed on the nut 17 side. However, this is just one example, and the positions of the bolt 13 and the terminal 15 may be reversed. In this embodiment, the nut 17 is attached via a washer 18. However, the washer 18 may be omitted.

Next, the detailed configuration of the holder 12 and the bolt 13 will be described with reference to FIGS. In the following description, the axial direction of the bolt 13 will be simply referred to as the "axial direction".

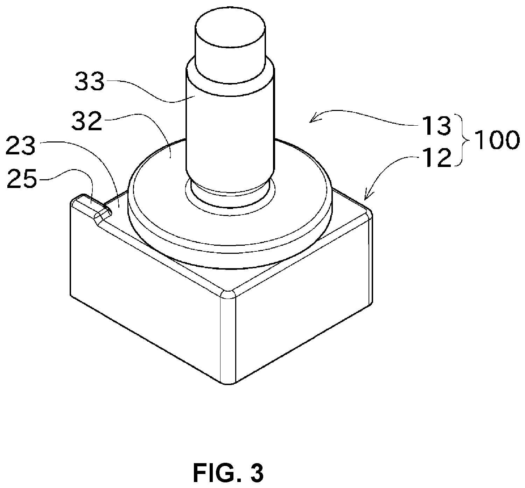

The holder 12 is made of resin and is molded using a die. The holder 12 includes a body 21 having a substantially rectangular parallelepiped shape. The shape of the body 21 is merely an example, and is not limited to a substantially rectangular parallelepiped shape. As shown in FIGS. 3 to 7, the body 21 is formed with an opening portion 22, an edge portion 23, an inner rib 24, an outer rib (protrusion portion) 25, and a drainage hole 26.

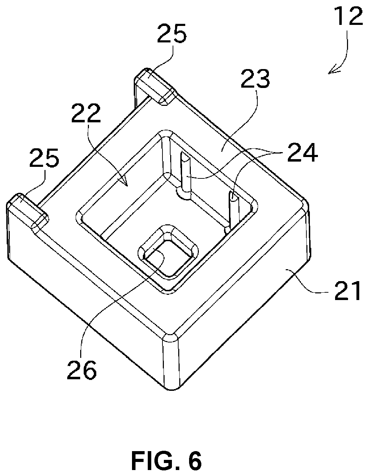

The opening portion 22 is an opening that has a substantially rectangular parallelepiped shape. The opening portion 22 in this embodiment may be a through opening or a non-through opening. The edge portion 23 is a portion that constitutes the periphery of the opening portion 22 when viewed in the axial direction. The edge portion 23 has a portion that stands upright from the bottom surface. The surface of the edge portion 23 facing the opening portion 22 (the surface facing inward) is the inner wall surface. A plurality of inner ribs 24 are formed on the inner wall surface. The inner rib 24 is an elongated portion that protrudes inward (towards the center of the opening portion 22) from the inner wall surface. The longitudinal direction of the inner rib 24 is parallel to the axial direction. The inner rib 24 is a structure for fixing the bolt 13 (described in detail later). The two inner ribs 24 are positioned opposite each other. Specifically, the inner ribs 24 are formed at corresponding positions on the opposing inner wall surfaces. In other words, a straight line perpendicular to a first inner wall surface and passing through a first inner rib 24 formed thereon passes through a second inner rib 24 formed on the opposing second inner wall surface. In this embodiment, there are four inner wall surfaces, two of which have the inner ribs 24 formed thereon, but the inner ribs 24 may be formed on all of the inner wall surfaces. The outer rib 25 is an elongated portion that protrudes outward (in a direction away from the center of the opening portion 22 when viewed in the axial direction) from the outer wall surface of the edge portion 23. The longitudinal direction of the outer rib 25 is parallel to the axial direction. The outer rib 25 is a structure for fixing the holder 12 to the base block 11 (details will be described later). The drainage hole 26 is formed in the bottom surface of the opening portion 22 of the holder 12. The water drainage hole 26 shown in FIG. 6 is a hole for draining water that has flowed into the electrical junction box 1 and reached the bolt holding structure 100 to the outside. The drainage holes 26 are not limited to being formed on the bottom surface of the opening portion 22 of the holder 12, but may be formed on the side surface of the holder 12.

The bolt 13 is made of metal and is conductive. As shown in FIGS. 3 to 8, the bolt 13 includes a fixing portion 31, a receiving portion 32, and a shaft portion 33.

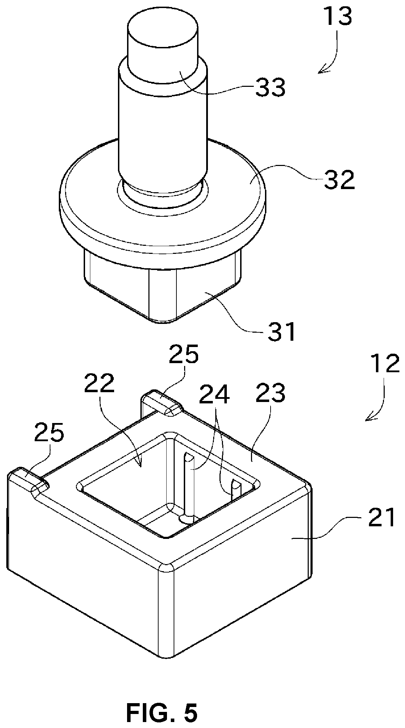

The fixing portion 31 is a portion for fixing the bolt 13 to the holder 12. The fixing portion 31 has a shape corresponding to the opening portion 22 of the holder 12. Therefore, the fixing portion 31 in this embodiment has a rectangular parallelepiped shape that is substantially the same size as the opening portion 22. The bolt 13 is fixed to the holder 12 by press-fitting the fixing portion 31 into the opening portion 22. In detail, as shown in FIG. 5, when the bolt 13 is inserted into the holder 12 with the fixing portion 31 at the tip, the fixing portion 31 is positioned inside the opening portion 22, so that the inner rib 24 is compressed and elastically deformed, and the reaction force causes the inner rib 24 to press the fixing portion 31. This causes the fixing portion 31 to be fixed to the opening portion 22.

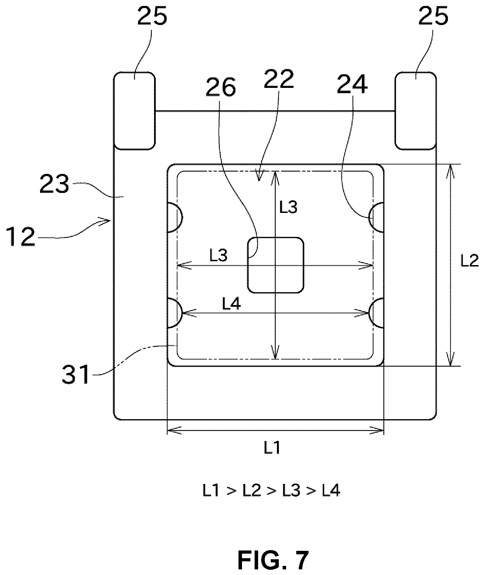

As shown in FIG. 7, the opening portion 22 and the fixing portion 31 are rectangular when viewed in the axial direction. Therefore, when a rotational force is applied to the bolt 13 with the axial direction as the center of rotation, the bolt 13 can be prevented from spinning freely. If the opening portion 22 and the fixing portion 31 have a polygonal shape when viewed in the axial direction, this anti-rotation function can be achieved. Therefore, the shapes of the opening portion 22 and the fixing portion 31 are not limited to a rectangular parallelepiped shape. The method of fixing the bolt 13 to the holder 12 is not limited to press-fitting. For example, the bolt 13 may be secured to the holder 12 by a snap fit or fastener.

The shapes of the opening portion 22 and the fixing portion 31 will be described in detail below. The opening portion 22 is rectangular and the fixing portion 31 is square. The lengths of the sides of the opening portion 22 and the fixing portion 31 are as follows. That is, as shown in FIG. 7, the long side of the opening portion 22 has a length L1, the short side of the opening portion 22 has a length L2, the length of one side of the fixing portion 31 is a length L3, and the length of the straight line connecting the opposing inner ribs 24 is a length L4. It should be noted that the length L4 indicates the length when the fixing portion 31 is not inserted into the opening portion 22.

In the above lengths, the relationship L1>L2>L3>L4 is established. Since the opening portion 22 is rectangular, the length L1 is different from the length L2. In other words, the lengths of two adjacent sides are different. The opening portion 22 may be a polygon other than a rectangle, or may be a square. The length L3 is shorter than the length L1 and the length L2. This allows the fixing portion 31 to be inserted into the opening portion 22. The length L4 is shorter than the length L3. As a result, the fixing portion 31 compresses the inner rib 24, so that the fixing portion 31 can be fixed to the holder 12 by using the restoring force of the inner rib 24.

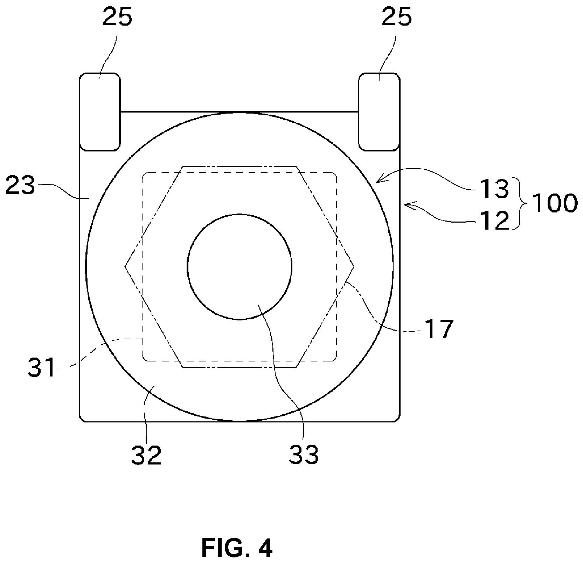

The receiving portion 32 is a portion for sandwiching the conductor between itself and the nut 17. In other words, the conductor is fixed by being sandwiched between the receiving portion 32 and the nut 17. Therefore, the receiving portion 32 is a portion located between the fixing portion 31 and the shaft portion 33 in the axial direction. In the axial view (FIG. 4), the receiving portion 32 is circular. By giving the receiving portion 32 a simple shape, the bolt 13 can be easily manufactured. In particular, when the bolt 13 is cut while being rotated about the axial direction, it becomes easier to manufacture the circular receiving portion 32.

Here, the bolt of Patent Document 1 does not have a portion corresponding to the receiving portion. Therefore, since the conductor is sandwiched between the bolt head and the nut, which have a relatively small diameter, the contact area between the bolt and the conductor tends to be small. As a result, a local force is applied to the conductor, which may cause the conductor to deform, the force holding the conductor to weaken, or an increase in the contact resistance value related to electrical conduction.

In this regard, in this embodiment, the bolt 13 is formed with a receiving portion 32. The receiving portion 32 is of a relatively large size. Specifically, when viewed in the axial direction, the receiving portion 32 is larger than the fixing portion 31. In this embodiment, in FIG. 4, the fixing portion 31 entirely overlaps with the receiving portion 32. However, as long as at least a portion of the receiving portion 32 is located radially outward of the fixing portion 31, the size of the receiving portion 32 can be changed as appropriate. In this embodiment, since the size of the receiving portion 32 is large, the contact area between the bolt 13 and the conductor (the bus bar 14 or the terminal 15) is large, and the force applied to the conductor is dispersed. As a result, deformation of the conductor can be suppressed, the conductor can be stably held, and the contact resistance value relating to electrical conduction can be reduced.

Furthermore, in this embodiment, the lower surface of the receiving portion 32 (the surface on the fixing portion 31 side) is in surface contact with the outer surface (specifically, the upper surface) of the holder 12. This makes it difficult for the receiving portion 32 to become loose, and the orientation (posture) of the receiving portion 32 can be stabilized. As a result, the conductor can be stably held.

Here, if the size of the receiving portion 32 is excessively large, the size of the base block 11 to which the bolt holding structure 100 is fixed may become too large. On the other hand, if the size of the receiving portion 32 is secured to a certain extent, the above-mentioned effect can be sufficiently achieved. Taking the above into consideration, in this embodiment, the contour of the receiving portion 32 overlaps with the edge portion 23 when viewed in the axial direction. The contour of the receiving portion 32 is, in other words, the radially outermost position of the receiving portion 32. The edge portion 23 is a portion of the holder 12 that is located relatively outside. Therefore, the contour of the receiving portion 32 overlaps with the edge portion 23, so that the size of the receiving portion 32 is sufficiently secured relative to the holder 12, and the receiving portion 32 does not protrude from the holder 12. That is, the size of the receiving portion 32 can be increased without affecting the attachment of the base block 11.

From another perspective, in this embodiment, the center position of the receiving portion 32 coincides with the center of the edge portion 23 (the intersection of the diagonals), and further, the diameter of the receiving portion 32 is substantially the same as the length of one side of the edge portion 23. In other words, the diameter of the receiving portion 32 is longer than the length of one side of the opening portion 22. Even when this condition is met, the size of the receiving portion 32 is sufficiently secured relative to the holder 12, and the receiving portion 32 does not (almost or not at all) protrude from the holder 12. In addition, "substantially the same length" means that the lengths are the same in this technical field, or that even if there is a difference in length, the function of each part is not affected. Specifically, although it depends on the overall size of each part, it indicates that the difference in length is, for example, about 1 mm or less or 2 mm or less.

The shaft portion 33 is a cylindrical portion on which a screw groove is formed. The nut 17 is fastened to the shaft portion 33 as described above.

Next, a structure for fixing the holder 12 to the base block 11 will be described with reference to FIGS.

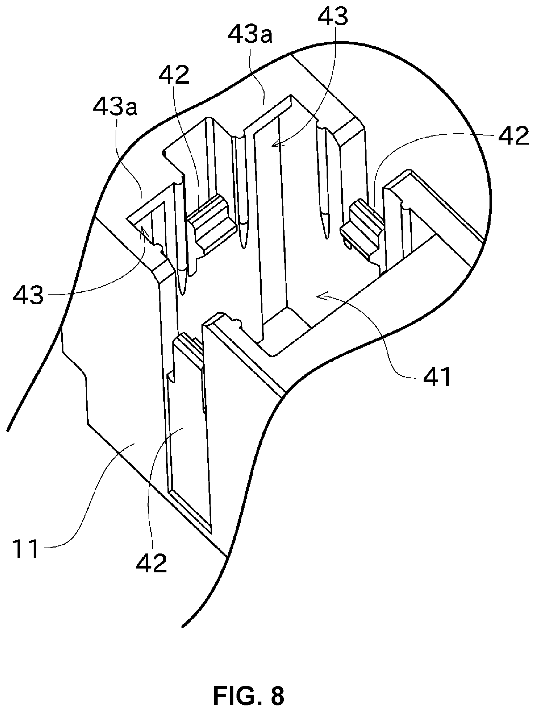

As shown in FIG. 8, the base block 11 is formed with a housing portion 41, an engagement portion 42, and a rib groove 43. The housing portion 41 is a portion for housing the holder 12. The engagement portion 42 is formed so as to interfere with the inner region of the housing portion 41 (the region that holds the holder 12). The engagement portion 42 has a stepped shape and is configured to be elastically deformable outwardly of the housing portion 41. When the holder 12 is inserted into the housing portion 41, the engagement portion 42 is pressed by the holder 12 and deformed outward. As a result, the holder 12 is fixed to the housing portion 41 in a state where the holder 12 is placed on the stepped portion of the engagement portion 42. The structure for fixing the holder 12 to the housing portion 41 is merely an example, and the holder 12 may be fixed to the housing portion 41 by a structure different from that of this embodiment.

The rib grooves 43 are grooves whose position and shape correspond to the outer ribs 25 of the holder 12. In this embodiment, the outer rib 25 of the holder 12 is formed on only one surface of the holder 12. Therefore, the rib groove 43 is formed on only one surface of the inner wall surface of the housing portion 41. When the holder 12 is inserted into the housing portion 41 in the correct orientation, the outer rib 25 fits into the rib groove 43, so no interference occurs. On the other hand, if the holder 12 is inserted into the housing portion 41 in the incorrect orientation, the outer rib 25 will come into contact with and interfere with the inner wall surface of the housing portion 41 other than the rib groove 43, making it impossible to insert the holder 12 into the base block 11. In this manner, the outer rib 25 and the rib groove 43 allow the holder 12 to be fixed to the base block 11 in the correct orientation.

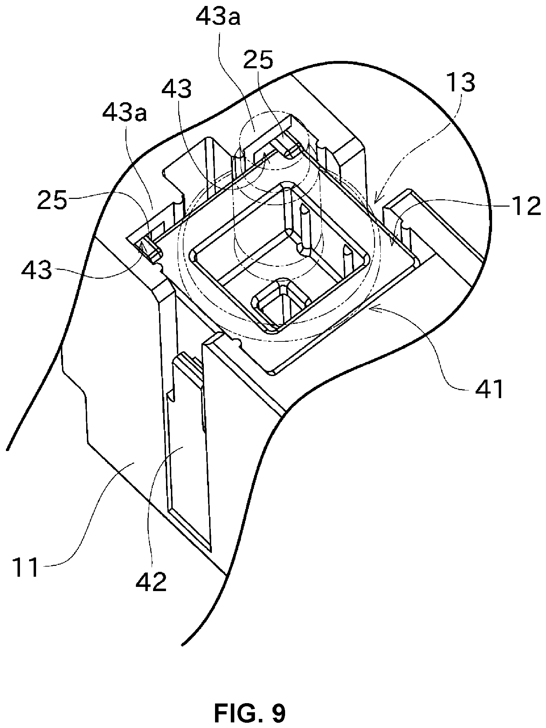

As shown in FIG. 9, when the holder 12 is fixed to the base block 11, the outer rib 25 fits into the rib groove 43. The upper portion of the rib groove 43 (the end opposite to the bottom surface of the housing portion 41) is closed by a closing portion 43a. Therefore, even if a force is applied to the holder 12 in the removal direction, the outer rib 25 interferes with this closing portion 43a, making it difficult for the holder 12 to come off. The rib groove 43 and the closing portion 43a are not essential components and may be omitted.

As described above, the bolt holding structure 100 of this embodiment includes the bolt 13 and the holder 12. The bolt 13 holds the conductors (bus bar 14, terminal 15) between itself and the nut 17. The holder 12 holds the bolt 13. The bolt 13 includes the fixing portion 31, the shaft portion 33, and the receiving portion 32. The fixing portion 31 can be fixed to the holder 12. The shaft portion 33 is formed with the screw groove, and the nut 17 is fastened thereto. The receiving portion 32 is located between the fixing portion 31 and the shaft portion 33 in the axial direction, and has the portion located radially outward from the fixing portion 31 when viewed in the axial direction.

Because the bolt 13 has the receiving portion 32, local force is less likely to be applied to the conductor sandwiched between the bolt 13 and nut 17. As a result, it is capable of suppressing deformation of a conductor sandwiched between the bolt and a nut, and suppressing a weakening of the force holding the conductor.

In the bolt holding structure 100 of this embodiment, the holder 12 is made of resin.

This makes it possible to stably fix the bolt 13 to the holder 12 by utilizing the elastic deformation of the resin while ensuring insulation between the bolt 13 and the holder 12.

In the bolt holding structure 100 of this embodiment, the holder 12 has the structure that allows the fixing portion 31 of the bolt 13 to be fixed by press-fitting.

This allows the bolt 13 to be fixed to the holder 12 simply by inserting the fixing portion 31 of the bolt 13 into the holder 12.

In the bolt holding structure 100 of this embodiment, the receiving portion 32 is circular when viewed in the axial direction.

This makes it easier to manufacture the bolt 13 having the receiving portion 32. Moreover, the contact area between the receiving portion 32 and the conductor can be ensured regardless of the orientation of the receiving portion 32.

In the bolt holding structure 100 of this embodiment, the holder 12 is formed with the opening portion 22 into which the fixing portion 31 of the bolt 13 can be attached, and the edge portion 23 that forms the periphery of the opening portion 22. When viewed in the axial direction, the contour of the receiving portion 32 of the bolt 13 overlaps with the edge portion 23 of the holder 12.

Since the contour of the receiving portion 32 overlaps with the edge portion 23 of the holder, the size of the receiving portion 32 can be increased without the receiving portion 32 protruding from the holder 12. This allows the contact area between the receiving portion 32 and the conductor to be increased, making it even more difficult for local force to be applied to the conductor.

In the bolt holding structure 100 of this embodiment, the holder 12 is formed with an opening portion 22 into which the fixing portion 31 of the bolt 13 can be attached. When the opening portion 22 is viewed in the axial direction, one of two adjacent sides has a length longer than the other side.

This allows the holder 12 to be realized using opening portion 22 of various shapes, not limited to a square shape.

In the bolt holding structure 100 of this embodiment, the holder 12 is formed with an opening portion 22 into which the fixing portion 31 of the bolt 13 can be attached. As shown in FIG. 7, the opening portion 22 and the fixing portion 31 are rectangular when viewed in the axial direction. A plurality of inner ribs 24 of the opening portion 22 are formed on the inner wall surface. At least two of the inner ribs 24 are positioned opposite each other. When viewed in the axial direction, the length L3 of one side of the fixing portion 31 is longer than the length L4 of the straight line connecting the opposing inner ribs 24 and is shorter than the lengths L1, L2 of one side of the opening portion 22.

This makes it easy to insert the fixing portion 31 into the opening portion 22, and also makes it possible to fix the fixing portion 31 to the holder 12 using the inner rib 24.

In the bolt holding structure 100 of this embodiment, the receiving portion 32 is circular when viewed in the axial direction. In the bolt holding structure 100 of this embodiment, the holder 12 is formed with the opening portion 22 into which the fixing portion 31 of the bolt 13 can be attached. When viewed in the axial direction, the opening portion 22 is square or rectangular having a long side and a short side. When viewed in the axial direction, the diameter of the receiving portion 32 is longer than the length L1 of one side of the square or the longer side of the rectangle.

Since the diameter of the receiving portion is greater than the length of one side of the square or the length of the long side of the rectangle of the opening portion, the receiving portion and the holder can come into contact with each other.

In the bolt holding structure 100 of this embodiment, the receiving portion 32 is circular when viewed in the axial direction. In the bolt holding structure 100 of this embodiment, the holder 12 is formed with the opening portion 22 into which the fixing portion 31 of the bolt 13 can be attached. When viewed in the axial direction, the opening portion 22 is square. When viewed in the axial direction, the diameter of the receiving portion 32 is longer than the length of one side of the opening portion 22.

Since the diameter of the receiving portion 32 is longer than the length of one side of the opening portion 22, the receiving portion 32 and the holder 12 can come into contact with each other.

In the bolt holding structure 100 of this embodiment, the holder 12 is attached to the base block 11. The holder 12 is formed with an outer rib 25 that protrudes radially outward. When the holder 12 is attached to the base block 11 in the correct orientation, the outer rib 25 and the base block 11 do not interfere. When the holder 12 is attached to the base block 11 in the incorrect orientation, the outer rib 25 and the base block 11 interfere.

This prevents the holder 12 from being attached to the base block 11 in the incorrect orientation.

In the bolt holding structure 100 of this embodiment, the holder 12 is formed with the drainage hole 26 for draining water that has entered.

This can prevent water from accumulating inside the holder 12.

In the bolt holding structure 100 of this embodiment, the surface of the receiving portion 32 of the bolt 13 on the fixing portion 31 side is in surface contact with the outer surface of the holder 12.

This makes it possible to stabilize the orientation of the receiving portion 32, so that the receiving portion 32 and the conductor can be directly opposed to each other. As a result, a sufficient contact area between the receiving portion 32 and the conductor can be secured, making it even more difficult for local force to be applied to the conductor.

In the bolt holding structure 100 of this embodiment, the receiving portion 32 is circular when viewed in the axial direction. When viewed in the axial direction, the holder 12 is square. When viewed in the axial direction, the diameter of the receiving portion 32 and the length of one side of the holder 12 are substantially the same.

Since the diameter of the receiving portion 32 and the length of one side of the holder 12 are substantially the same, the size of the receiving portion 32 can be increased as long as the receiving portion 32 does not protrude from the holder 12. This increases the contact area with the conductor, making it even more difficult for local force to be applied to the conductor.

### LIST OF REFERENCE NUMERALS

- 1: electrical junction box
- 11: base block
- 12: holder
- 13: bolt
- 21: body
- 22: opening portion
- 23: edge portion
- 24: inner rib
- 25: outer rib (protrusion portion)
- 26: drainage hole
- 31: fixing portion
- 32: receiving portion
- 33: shaft portion

## Claims

1. A bolt holding structure comprising:
a bolt that holds a conductor between itself and a nut; and
a holder that holds the bolt; wherein
the bolt comprises:
a fixing portion that is fixable to the holder;
a shaft portion in which a screw groove is formed and to which the nut is fastened; and
a receiving portion that is located between the fixing portion and the shaft portion in an axial direction, and has a portion located radially outward from the fixing portion when viewed in the axial direction.

2. The bolt holding structure according to claim 1, wherein
the holder is made of resin.

3. The bolt holding structure according to claim 2, wherein
the holder has a structure capable of fixing the fixing portion of the bolt by press-fitting.

4. The bolt holding structure according to claim 1, wherein
the receiving portion is circular when viewed in the axial direction.

5. The bolt holding structure according to claim 1, wherein
the holder is formed with an opening portion into which the fixing portion of the bolt can be attached, and an edge portion that forms a periphery of the opening portion, and
when viewed in the axial direction, a contour of the receiving portion of the bolt overlaps with the edge portion of the holder.

6. The bolt holding structure according to claim 1, wherein
the holder is formed with an opening portion into which the fixing portion of the bolt can be attached, and
when the opening portion is viewed in the axial direction, one of two adjacent sides has a length longer than the other side.

7. The bolt holding structure according to claim 1, wherein
the holder is formed with an opening portion into which the fixing portion of the bolt can be attached,
when viewed in the axial direction, the opening portion and the fixing portion are rectangular,
a plurality of inner ribs are formed on an inner wall surface of the opening portion,
at least two of the inner ribs are positioned opposite each other, and
when viewed in the axial direction, a length of one side of the fixing portion is longer than a length of a line connecting opposing inner ribs and shorter than a length of one side of the opening portion.

8. The bolt holding structure according to claim 1, wherein
the receiving portion is circular when viewed in the axial direction,
the holder is formed with an opening portion into which the fixing portion of the bolt can be attached,
when viewed in the axial direction, the opening portion is square or rectangular having a long side and a short side, and
when viewed in the axial direction, a diameter of the receiving portion is longer than a length of one side of a square or a length of a longer side of the rectangle.

9. The bolt holding structure according to claim 1, wherein
the receiving portion is circular when viewed in the axial direction,
the holder is formed with an opening portion into which the fixing portion of the bolt can be attached,
when viewed in the axial direction, the opening portion is square, and
when viewed in the axial direction, a diameter of the receiving portion is longer than a length of one side of the opening portion.

10. The bolt holding structure according to claim 1, wherein
the holder is attached to a base block,
the holder is formed with a protrusion portion that protrudes radially outward,
when the holder is attached to the base block in the correct orientation, the protrusion portion and the base block do not interfere, and
when the holder is attached to the base block in an incorrect orientation, the protrusion portion and the base block interfere.

11. The bolt holding structure according to claim 1, wherein
the holder is formed with a drainage hole for draining water that has entered.

12. The bolt holding structure according to claim 1, wherein
a surface of the receiving portion of the bolt on the side of the fixing portion is in surface contact with an outer surface of the holder.

13. An electrical junction box comprising:
the bolt holding structure according to any one of claims 1 to 12; and
a first conductor and a second conductor that are sandwiched between the bolt and the nut and fixed by fastening the nut to the bolt.
